# FASCICULE DE BREVET EUROPEEN

(11) **EP 1 845 456 B1**
(45) Date de publication et mention de la délivrance du brevet: **08.04.2009**
(21) Numéro de dépôt: 07300863.3
(22) Date de dépôt: 14.03.2007
(51) Int. Cl.: G06F 13/00

(54) **Système d'interconnexions de blocs fonctionnels externes sur puce muni d'un unique protocole parametrable de communication**
On-Chip System zur Verbindung von externen Funktionsbausteinen mit einem einzigen parametrierbaren Kommunikationsprotokoll
On chip system for Interconnecting external functional blocks comprising a single parametrizable communication protocol

(30) Priorité: 12.04.2006 FR 0603248
(43) Date de publication de la demande: 17.10.2007
(73) Titulaire: ARTERIS, 78280 Guyancourt (FR)
(72) Inventeur: Douady, César, 91400, Orsay (FR); Boucard, Philippe, 78150, Le Chesnay (FR)
(74) Mandataire: de Kernier, Gabriel

(56) Documents cités:
- EP-A2- 0 458 516
- H. CHARLERY, A. GREINER, E. ENCRENAZ, L. MORTIEZ, A. ANDRIAHANTENAINA: "USING VCI IN A ON-CHIP SYSTEM AROUND SPIN NETWORK"[Online] 24 juin 2004 (2004-06-24), pages 1-6, XP002419220 Extrait de l'Internet: URL:http://www-asim.lip6.fr/~ema/pub/mixde s2004.pdf>
- ANJO K ET AL: "WRAPPER-BASED BUS IMPLEMENTATION TECHNIQUES FOR PERFORMANCE IMPROVEMENT AND COST REDUCTION" IEEE JOURNAL OF SOLID-STATE CIRCUITS, IEEE SERVICE CENTER, PISCATAWAY, NJ, US, vol. 39, no. 5, mai 2004 (2004-05), pages 804-817, XP001223061 ISSN: 0018-9200

## Description

La présente invention porte sur un système d'interconnexions de blocs fonctionnels externes sur puce muni d'un unique protocole paramétrable de communication.

L'évolution continue des technologies permet d'intégrer des systèmes de plus en plus complexes constitués de nombreux blocs fonctionnels différents. Ces blocs fonctionnels sont développés par des équipes différentes qui utilisent des méthodes et des protocoles de communication différents, ces blocs fonctionnels s'appellent des blocs de propriété intellectuelle "Intellectual Properties" en langue anglaise.

Il faut donc pouvoir faire communiquer ces blocs fonctionnels entre-eux, malgré leurs caractéristiques de fonctionnement différentes, telles que la taille des données utilisées et les fréquences utilisées.

En outre, les éléments communicants étant de plus en plus nombreux, les systèmes doivent être suffisamment flexibles ou adaptables pour supporter cette évolution.

De surcroît, le coût des fils dans un système d'interconnexions est devenu prépondérant par rapport au coût des portes logiques. Aussi, l'évaluation d'une architecture de réseau d'interconnexions sur silicium tient compte des conditions d'utilisation des fils et leur rentabilité (quantité d'informations transportées par rapport au coût). En outre, les temps de mise sur le marché de nouveaux produits tendant à se raccourcir, l'intégration des blocs fonctionnels doit être de plus en plus rapide. Aussi, le système ou réseau d'interconnexions doit être facile à mettre en oeuvre.

Des solutions existent pour l'interconnexion de blocs fonctionnels IP dans un système d'interconnexions sur puce de semiconducteur, et sont majoritairement à base de bus de données. Ces réseaux manquent de flexibilité nécessaire à une adaptation rapide aux évolutions technologiques et à l'augmentation du nombre d'éléments communicants.

Le document 'Using VCI in a on-chip system around SPIN Network' (HARLERY and Co) décrit un mécanisme de communication très général entre composants virtuels connectés dans le système, le réseau est divisé en un sous-réseau de requêtes et un sous-réseau de réponses.

De telles architectures de réseaux ne permettent pas de s'adapter facilement aux évolutions de besoins applicatifs.

Aussi, un but de l'invention est de proposer un système d'interconnexions de blocs fonctionnels externes sur puce muni d'un unique protocole paramétrable de communication, facilement adaptable en fonction de l'évolution des besoins applicatifs.

Ainsi, selon un aspect de l'invention, il est proposé un système d'interconnexions de blocs fonctionnels externes sur puce muni d'un unique protocole paramétrable de communication. Le système comprend deux réseaux de communication physiquement distincts, un réseau de requêtes apte à transmettre des messages de requête d'un bloc initiateur vers un bloc destinataire, et un réseau de réponses apte à transmettre des messages de réponse d'un bloc destinataire à un bloc initiateur. En outre, les messages de réponse comprennent des informations additionnelles rendant lesdits réseaux de requêtes et de réponses aptes à gérer respectivement les messages de requête indépendamment des messages de réponse.

Les réseaux de requêtes et de réponses étant aptes à gérer respectivement les messages de requête indépendamment des messages de réponse, il sont autonomes. Un paquet de réponse n'a pas besoin de connaître la requête associée, un changement de taille ou de fréquence du paquet de réponse est donc possible sans information supplémentaire et sans sauvegarder de contexte entre requêtes et réponses à l'intérieur du système ou réseau d'interconnexions.

Selon un mode de réalisation, ledit protocole est organisé en une pluralité de couches indépendantes. Lesdites couches indépendantes comprennent une couche de transport définissant la structure d'un paquet de données, et une couche physique définissant les signaux échangés aux interfaces des éléments du système d'interconnexions. Des informations d'adresse, de taille de données, et d'opération sont contenues dans les en-têtes des paquets de données.

Le protocole étant organisé en couches séparées, les règles qui définissent le comportement d'une couche sont indépendantes de la façon dont la couche précédente est implémentée. Aussi, il est plus aisé d'effectuer des optimisations sur chaque couche, indépendamment des choix qui ont pu être effectués sur les autres couches.

En outre, cela permet de réduire le nombre de fils nécessaires, en utilisant les mêmes fils pour acheminer à la fois des données des paquets, et des données représentatives d'informations d'adresses et de contrôle.

Selon un mode de réalisation, lesdites informations additionnelles de paquets de données de messages de réponse comprennent une information représentative de l'opération effectuée, et une information représentative de la taille des données associées à ladite opération effectuée.

Par exemple, l'opération est une lecture ou une écriture de données.

Selon un mode de réalisation, suite à une lecture de données incomplètes ou non alignées par rapport à l'espace mémoire accédé lors de ladite lecture, les paquets du message de réponse associé à ladite lecture comprennent, à une position prédéterminée, lesdites données lues.

Selon un mode de réalisation, suite à une lecture de données incomplètes ou non-alignées par rapport à l'espace mémoire accédé lors de ladite lecture, les paquets du message de réponse associé à ladite lecture comprennent une information pour aligner lesdites données lues par rapport audit espace mémoire accédé.

Selon un mode de réalisation, l'interface entre deux éléments du système d'interconnexions comprend :
- des moyens pour recevoir ou transférer un signal de cadencement d'horloge ;
- des moyens pour recevoir ou transférer des signaux d'arrêt ou de démarrage desdits éléments de manière indépendante ;
- des moyens de transfert de signaux de contrôle de flux relatif aux cycles d'horloge ;
- des moyens de transfert de signaux de délimitation des paquets de données ; et
- des moyens de transfert de signaux de taille paramétrable de transmission de contenu des paquets de données.

Selon un mode de réalisation de l'invention, l'interface entre deux éléments du système d'interconnexions comprend, en outre, des moyens de génération de signaux permettant de favoriser la transmission de messages par rapport à d'autres.

Selon un mode de réalisation, les en-têtes des paquets de données comprennent un espace disponible réservé à l'usage des blocs initiateurs.

Selon un mode de réalisation, les paquets de données sont de longueur variable, égale à un multiple d'une quantité élémentaire de données. Un lien du système peut être paramétré par le rapport entre la quantité de données qu'il peut transmettre par cycles d'horloge et ladite quantité élémentaire de données.

Selon un mode de réalisation, les liens comprennent des moyens de changement de fréquence d'horloge, et/ou des moyens de suppression de trous de données dans les paquets de données en cas de taux de trous prédictible, et/ou des moyens de changement de sérialisation des paquets.

Selon un mode de réalisation, les éléments du système d'interconnexions sont configurables par des moyens logiciels par l'intermédiaire d'un réseau séparé.

Par exemple, ledit réseau séparé est apte à fonctionner à faible débit par rapport au débit moyen dans le système d'interconnexions.

Selon un autre aspect de l'invention, il est proposé des générateurs de blocs IP paramétrables pour construire de façon modulaire un système tel que décrit précédemment, en utilisant des interfaces standards.

Selon un mode de réalisation, les générateurs comprennent :
- un générateur de blocs IP de protocole paramétrable ;
- des générateurs de blocs IP d'interface réseau entre ledit protocole paramétrable et d'autres protocoles de communication ;
- des générateurs de blocs IP de commutateurs ;
- des générateurs de blocs IP de changement de domaine d'horloge, de compactage de données de paquets, de transport de paquets sur de longues distances, et de paramétrage des rapports entre la quantité de données qu'un lien peut transmettre par cycle d'horloge et ladite quantité élémentaire de données ; et
- des générateurs de blocs IP d'un réseau séparé de configuration des éléments du système d'interconnexions.

D'autres buts, caractéristiques et avantages de l'invention apparaîtront à la lecture de la description suivante, de quelques exemples nullement limitatifs, et faisant référence aux dessins annexés, sur lesquels :
- la figure 1 illustre le protocole paramétrable organisé en une pluralité de couches indépendantes, selon un aspect de l'invention ; et
- la figure 2 illustre un système d'interconnexions de blocs fonctionnels externes sur puce, selon un aspect de l'invention.

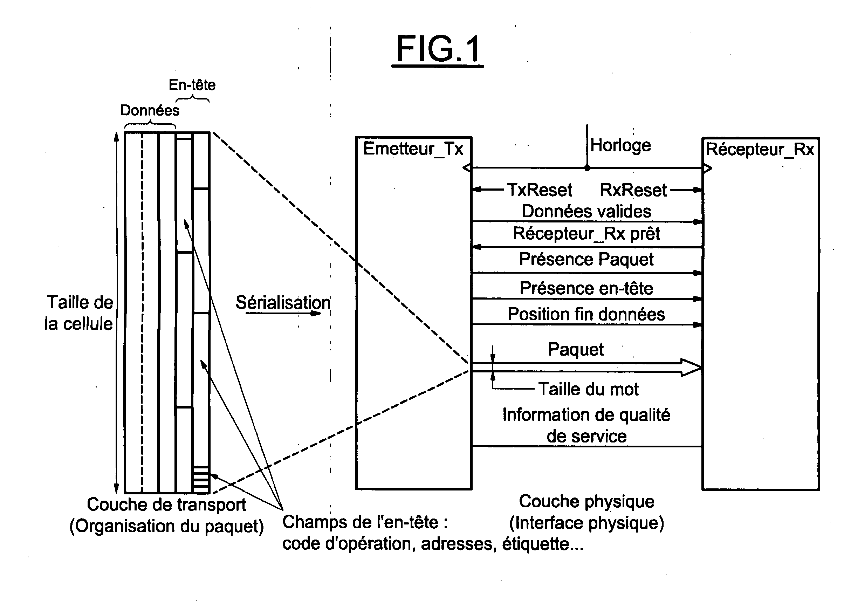

Tel qu'illustré schématiquement sur la figure 1, le protocole est défini sur plusieurs couches indépendantes, en l'occurrence sur trois couches qui sont la couche physique, la couche de transport et la couche transactionnelle.

La couche de transport sert à réglementer l'échange de paquets de données. Un paquet de données est constitué d'un nombre entier de cellules de même taille.

Une cellule est une quantité élémentaire de données, dont la taille est un paramètre du protocole de communication.

La taille de l'en-tête du paquet est de une ou deux cellules, suivant qu'il s'agit d'un paquet de réponse ou d'un paquet de requête. Par exemple, dans l'en-tête d'un paquet de données de requête, se trouve l'adresse de l'élément destinataire dans le réseau et l'adresse de stockage dans l'espace d'adressage de l'élément destinataire, qui n'a pas besoin d'être présent dans l'en-tête du paquet de données de la réponse associée. L'espace d'adressage de l'élément destinataire correspond à une plage d'adresse pouvant être accédée, ou à laquelle un dispositif matériel peut être atteint. Ces adresses peuvent être physiques ou virtuelles.

Un en-tête de paquet de données contient toujours l'adresse de l'élément initiateur dans le système ou réseau d'interconnexions, ainsi qu'une information d'étiquette ("tag" en langue anglaise) servant à identifier les différents échanges de données effectués par un même élément initiateur.

En effet, dès qu'un élément initiateur peut communiquer avec plusieurs éléments destinataires, il doit pouvoir identifier la provenance des paquets de données de réponse qu'il reçoit et il ne peut donc pas contrôler l'ordonnancement des paquets s'ils proviennent d'éléments destinataires différents par des chemins différents.

Mettre l'adresse de l'élément destinataire dans l'en-tête d'un paquet de réponse, peut être coûteux si le nombre d'éléments destinataires est élevé.

Toutefois, comme à un instant donné, le nombre d'éléments destinataires correspondant avec l'élément initiateur est limité, on affecte à chacun de ces éléments destinataires un identifiant, ou une étiquette, sur un petit nombre de bits.

Cette étiquette est associée au paquet de données de requête, et quand l'élément destinataire émet un paquet de données de réponse correspondant, il y joint l'étiquette correspondante.

La séparation de la couche de transport et de la couche physique est effectuée en mettant dans l'en-tête d'un paquet toutes les informations d'adresse et de contrôle qui concernent le paquet, mais pas d'informations concernant la façon dont il va être physiquement transporté.

L'en-tête d'un paquet comprend un code d'opération précisant le type d'opération effectué ou à effectuer (par exemple type lecture ou type d'écriture), l'adresse de l'élément initiateur dans le réseau et une étiquette identifiant l'élément destinataire correspondant.

L'en-tête d'un paquet de données peut également comprendre, selon les cas, l'adresse de l'élément destinataire, l'adresse correspondant à l'opération effectuée dans le domaine d'adressage de l'élément destinataire, la longueur des données, des bits de contrôle du transport (correspondant par exemple à une transaction exclusive ou sécurisée), et d'éventuelles autres informations codées sur des bits disponibles réservés à l'usage des éléments initiateurs.

Le protocole de communication définit, pour un paquet de données, la position des différents champs dans l'en-tête du paquet de données en fonction des codes d'opération.

La séparation des paquets de données de requête et des paquets de réponse, avec des paquets de réponse autonomes, est effectuée en mettant dans le paquet de données de réponse toute l'information nécessaire permettant d'éviter de sauvegarder des contextes, en particulier lors des changements de format sur les paquets de données, dans les éléments constitutifs du réseau d'interconnexions.

Une manière d'assurer l'autonomie ou l'indépendance des paquets de données de réponse par rapport aux paquets de données de requête, est d'avoir un code d'opération définissant le type de transaction (par exemple type de lecture ou type d'écriture) et la quantité de données associées en cas de lecture.

En outre, lors d'une lecture, il peut arriver d'accéder à des informations incomplètes ou non-alignées par rapport à l'espace mémoire accédé lors de la lecture dans l'élément destinataire.

En effet, les données sont généralement lues dans le format de l'élément destinataire, et transmises telles quelles à l'élément initiateur correspondant. Or, si la requête exige un positionnement particulier des données pour la réponse correspondante, il faut que cette information de positionnement soit déterminée à partir d'un paquet de données de réponse associé.

Il est, par exemple, possible de positionner les données lues dans un paquet de données de réponse, à une position prédéterminée, et c'est l'élément initiateur qui recadre les données à l'arrivée en connaissant la position prédéterminée.

I1 est également possible d'insérer dans l'en-tête d'un paquet de données de réponse une information pour aligner les données lues par rapport à l'espace mémoire accédé.

Toute interface physique est indépendante du type de message, car pour le transport physique, toutes les cellules ou quantités de données élémentaires sont équivalentes. L'interface physique définit essentiellement la nature des signaux dans les liens entre les éléments constitutifs du réseau d'interconnexions.

L'interface physique comprend les signaux indispensables au transport physique des données durant un cycle d'horloge (figure 1), tels :
- un signal de cadencement d'horloge ;
- des signaux d'arrêt et de redémarrage indépendants d'un élément du système d'interconnexions comprenant au moins un signal de réinitialisation ou "reset" en langue anglaise. Ces signaux peuvent comprendre un signal de contrôle d'alimentation, et/ou un signal servant à initialiser le contrôle de flux sur le lien ;
- des signaux de contrôle de flux relatif aux cycles d'horloge, permettant de supprimer les files d'attente de stockage des paquets de données aux noeuds du réseau, ou d'avoir des trous dans les paquets de données. Ces signaux peuvent également comprendre un signal de l'émetteur au récepteur d'un paquet de données, représentant une information de validité des données, et un signal du récepteur vers l'émetteur d'un paquet de données, comprenant une information représentant l'aptitude du récepteur à recevoir des données. Un récepteur qui n'est pas prêt à recevoir des données peut bloquer l'émission de données par l'émetteur ;
- des signaux de délimitation des paquets de données ;
- des signaux de taille paramétrable pour le transfert des données durant un cycle d'horloge, ne correspondant pas nécessairement à la taille d'une cellule ou quantité de données élémentaires. Le nombre de cellules acheminées par cycle, ou mot définit le degré de ces réalisations du paquet de données. Les degrés de ces réalisations les plus pratiques sont un quart, un demi, un, deux et quatre cellules acheminées par cycles d'horloge. La taille de la cellule dépend des paramètres du protocole de communication ;
- d'éventuels signaux liés à la qualité de service d'un lien ou, en d'autres termes, des signaux permettant de favoriser la transmission de messages par rapport à d'autres, pour favoriser le passage de paquets de données jugés prioritaires.

Lorsque cela est nécessaire, l'information de contrôle présente dans l'en-tête d'un paquet de données de requête peut être analysée par l'élément destinataire et retransmise, modifiée ou non, à destination de l'élément initiateur dans le paquet de données de réponse associé.

Les en-têtes des paquets de données comprennent un espace disponible réservé à l'usage des blocs initiateurs.

Par exemple, si plusieurs transactions d'un élément initiateur sont agrégées dans un unique paquet de données de requêtes au niveau de l'interface réseau, au lieu de sauvegarder comment les requêtes ont été agrégées dans une file d'attente de contexte, on code l'information sur les bits privés de l'espace disponible réservé de l'en-tête du paquet de données de requête.

Lorsque le paquet de données de réponse correspondant est reçu par l'élément initiateur, les bits de données privées qui lui ont été transmis permettent de désagréger la réponse et de terminer ainsi cet ensemble de transactions initiées par l'élément initiateur.

Généralement, la taille d'une cellule est fixée par les contraintes sur les tailles de données plutôt que par les contraintes sur les tailles des en-têtes des paquets de données. L'en-tête comprend donc généralement quelques bits inutilisés, qui peuvent ainsi être mis à profit pour remplacer avantageusement des mémoires de contexte dans les interfaces du système d'interconnexions.

Le contenu du paquet ne dépend pas de la manière dont il est transporté. Les paquets de données de requêtes et de réponses n'ont pas besoin d'avoir les mêmes sérialisations, qui sont définies lien par lien, en choisissant la largeur physique du lien.

Lors des changements de format, la largeur des liens et la fréquence de cadencement d'horloge peuvent changer, mais les débits s'ajustent sur les éléments les plus lents grâce au contrôle de flux.

Pour un changement de fréquence, on utilise une file d'attente de type FIFO, à deux horloges, dont la taille est suffisante pour ne jamais perdre inutilement des cycles correspondant au temps de parcours de la boucle locale du contrôle de flux, comptée en nombre de cycles de l'horloge la plus lente. La taille de quelques mots suffit pour une telle file d'attente.

Lors d'une augmentation de la fréquence ou de la taille du lien, des trous de données apparaissent à l'intérieur des paquets de données, ce qui peut diminuer les performances de certains éléments destinataires, tels qu'un contrôleur de mémoire DRAM.

Ces trous de données peuvent être supprimés à l'aide d'une file d'attente de type FIFO, qui mémorise entièrement un paquet de données avant de le transmettre.

Cependant, ceci est coûteux en surface de réalisation, comme en latence, car en ce cas, la file d'attente doit avoir une taille égale à la taille maximale d'un paquet de données supporté par le protocole de communication.

Toutefois, lorsque le taux de trous de données dans le paquet de données peut être prédit, la taille de la file d'attente de compaction peut être réduite grâce à l'information de taille présente dans l'en-tête des paquets de données.

L'utilisation de cette information et de la connaissance du taux de trous de données permet d'anticiper l'émission du paquet de données sans trou de données, dès que cela est possible, et sans attendre la fin du paquet de données.

Par exemple, en cas de doublement du débit, la taille de la file d'attente et la latence peuvent être réduites d'un facteur deux.

Dans un système d'interconnexions constitué de liens point à point, les chemins entre les éléments initiateurs et les éléments destinataires sont partiellement partagés afin d'utiliser au mieux les fils.

Il existe donc des points de convergence et de redistribution des flux de données aux noeuds du réseau d'interconnexions, qui sont réalisés au moyen de commutateurs ("switch" en langue anglaise).

Lorsque ces noeuds forment des cycles de routage, il existe un risque de blocage définitif du réseau d'interconnexions ("dead lock" en langue anglaise) par l'apparition d'une chaîne de paquets de données qui se bloquent mutuellement. Dans un tel cas de blocage, il est alors nécessaire de réinitialiser l'ensemble du système.

I1 est possible de garantir, par construction, l'élimination de ce risque de blocage, car, avec la séparation des requêtes et des réponses, pour éviter de telles boucles, il suffit d'éviter la présence de telles boucles dans la topologie de chacun des réseaux de requêtes et de réponses.

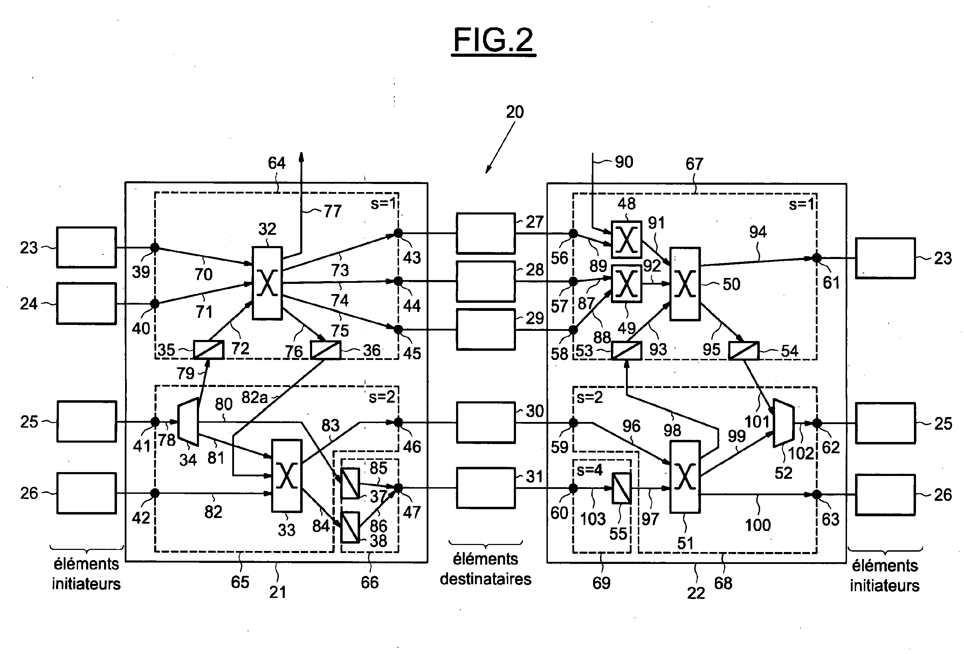

Tel qu'illustré sur la figure 2, le système d'interconnexions 20 comprend un réseau de requêtes 21 et un réseau de réponses 22 physiquement distincts.

Ces deux réseaux physiquement distincts ne comprennent pas d'éléments communs, et sont représentés de manière séparée pour plus de clarté, même si, dans la réalité, ces deux réseaux s'entrecroisent.

Des éléments initiateurs de messages 23, 24, 25 et 26 peuvent transmettre des messages de requête à destination d'éléments destinataires 27, 28, 29, 30 et 31, par l'intermédiaire du réseau de requêtes 21.

Les éléments destinataires 27, 28, 29, 30 et 31 peuvent transmettre des messages de réponse aux éléments initiateurs 23, 25, 26, qui nécessitent une réponse de leur part, par l'intermédiaire du réseau de réponse 22.

Pour plus de clarté, les deux réseaux 21 et 22 ont été représentés côte à côte, et les éléments initiateurs de messages 23, 24 et 26 nécessitant une réponse à un message de requête émis à destination d'un élément destinataire 27, 28, 29, 30 et 31 ont été représentés de manière dupliquée pour plus de clarté.

Le réseau de requêtes 21 comprend deux commutateurs 32, 33, un démultiplexeur 34 et quatre convertisseurs de format 35, 36, 37 et 38.

Le réseau de requêtes 21 comprend, en outre, des interfaces réseau 39, 40, 41 et 42, respectivement dédiées aux éléments initiateurs 23, 24, 25 et 26.

En outre, le réseau de requêtes 21 comprend des interfaces réseaux 43, 44, 45, 46 et 47, respectivement dédiées aux éléments destinataires 27, 28, 29, 30 et 31.

Le réseau de réponses 22 comprend quatre commutateurs 48, 49, 50 et 51, un multiplexeur 52, et trois convertisseurs de format 53, 54 et 55. En outre, le réseau de réponses 22 comprend des interfaces réseaux 56, 57, 58, 59, et 60, respectivement dédiées aux éléments destinataires 27, 28, 29, 30 et 31, et des interfaces réseaux 61, 62, et 63, respectivement dédiées aux éléments initiateurs 23, 25, et 26, qui nécessitent un message de réponse suite à l'envoi d'un message de requête.

Le réseau de requêtes 21 comprend trois sous-réseaux 64, 65 et 66, ayant chacun leur propre domaine d'horloge.

Le réseau de réponses 22 comprend trois sous-réseaux 67, 68 et 69, ayant chacun leur propre domaine d'horloge.

Le sous-réseau 64 comprend les interfaces réseaux 39, 40, 43, 44 et 45, le commutateur 32, et les convertisseurs de format 35 et 36.

Les interfaces réseaux 39 et 40, et le convertisseur de format 35, peuvent respectivement transmettre des paquets de données à destination du commutateur 32 par des liens 70, 71 et 72.

Le commutateur 32 peut transmettre des paquets de données à destination des interfaces réseaux 43, 44 et 45, et à destination du convertisseur de format 36, respectivement par des liens 73, 74, 75 et 76. En outre, le commutateur 32 peut transmettre des paquets de données à destination d'un autre élément par un lien 77.

Le sous-réseau 65 comprend les interfaces réseaux 41, 42 et 46, le démultiplexeur 34, et le commutateur 33. L'interface réseau 41 peut transmettre des paquets de données au démultiplexeur 34 par un lien 78.

Le démultiplexeur 34 peut transmettre des paquets de données aux convertisseurs de format 35 et 37, et au commutateur 33, respectivement par des liens 79, 80 et 81. L'interface réseau 42 peut transmettre des paquets de données au commutateur 33 par un lien 82, et le convertisseur de format 36 par un lien 82a.

Le commutateur 33 peut transmettre des paquets de données à l'interface réseau 46 et au convertisseur de format 38, respectivement par des liens 83 et 84.

Le sous-réseau 66 comprend les convertisseurs de format 37 et 38, ainsi que l'interface réseau 47. Les convertisseurs de format 37 et 38 peuvent respectivement transmettre des paquets de données à l'interface réseau 47 par des liens 85 et 86.

Le sous-réseau 67 comprend les interfaces réseaux 56, 57 et 58, les commutateurs 48, 49 et 50, les convertisseurs de format 53 et 54, et l'interface réseau 61.

Les interfaces réseaux 57 et 58 peuvent transmettre des paquets de données au commutateur 49, respectivement par des liens 87 et 88. L'interface réseau 56 peut transmettre des paquets de données au commutateur 48 par un lien 89.

Le commutateur 48 peut également recevoir des paquets de données d'un élément extérieur au réseau de réponses 22 par un lien 90.

Les commutateurs 48 et 49, et le convertisseur de format 53 peuvent respectivement transmettre des paquets de données au commutateur 50 par des liens 91, 92 et 93. Le commutateur 50 peut respectivement transmettre des paquets de données à l'interface réseau 61 et au convertisseur de format 54 par des liens 94 et 95.

Le sous-réseau 68 comprend les interfaces réseaux 59, 62 et 63, le commutateur 51, et le multiplexeur 52.

L'interface réseau 59 et le convertisseur de format 55 peuvent respectivement transmettre des paquets de données au commutateur 51 par des liens 96 et 97.

Le commutateur 51 peut respectivement transmettre des paquets de données au convertisseur de format 53, au multiplexeur 52, et à l'interface réseau 63 par des liens 98, 99 et 100.

Le convertisseur de format 54 peut transmettre des paquets de données au multiplexeur 52 par un lien 101.

En outre, le multiplexeur 52 peut transmettre des paquets de données à l'interface réseau 62 par un lien 102.

Le sous-réseau 69 comprend l'interface réseau 60 et le convertisseur de format 55, ainsi qu'un lien 103 permettant à l'interface réseau 60 de transmettre des paquets de données au convertisseur de format 55.

On appelle sérialisation s, le rapport de la largeur du lien (ou taille du mot) utilisé sur la taille de la cellule. Pour les sous-réseaux 64 et 67, la sérialisation s vaut un, pour les sous-réseaux 65 et 66, la sérialisation s vaut deux, et pour les sous-réseaux 66 et 69, la sérialisation s vaut quatre.

Sur la figure 2, on peut suivre, de gauche à droite, les chemins utilisés pour une transaction.

L'élément initiateur (à gauche) émet un paquet de données de requête qui transite à travers le réseau de requêtes suivant un chemin déterminé jusqu'à l'élément destinataire.

Ce dernier retourne généralement un paquet de données de réponse à travers le réseau de réponses pour le même élément initiateur (dupliqué à droite de la figure).

Toutefois, certains éléments initiateurs, comme les mémoires à accès direct ou DMA, ne demandent pas de réponse de la part d'un élément destinataire, et ne sont pas dupliqués à droite de la figure 2, tel l'élément initiateur 24.

Les réseaux de requêtes et de réponses ne sont pas symétriques. Aussi, il est avantageux de pouvoir faire des optimisations indépendantes des réseaux de requêtes et de réponses.

Certains éléments constitutifs du réseau ou système d'interconnexions peuvent être avantageusement configurés au moyen d'un logiciel applicatif, en pouvant paramétrer les valeurs de registres logiciels accédés au moyen d'un réseau dédié à cet usage.

Une telle programmation est essentiellement faite à l'initialisation du système et supporte des débits très lents. Aussi, il est intéressant d'utiliser à cet effet un réseau à très faible coût. Chaque registre logiciel a son adresse dans ce réseau dédié, qui peut être accédé par les réseaux de requêtes et de réponses, avec présence, si nécessaire, d'une interface entre ce réseau dédié et les réseaux de requêtes et de réponses.

Aussi, la séparation du routage dans le réseau permet une certaine indépendance dans l'optimisation de chaque lien, ce qui facilite la conception et la mise en oeuvre d'un ensemble de blocs IP, ou blocs de propriété intellectuelle, pour les éléments constitutifs du réseau d'interconnexion.

Ces blocs IP sont paramétrables et peuvent être assemblés par simple aboutement d'interfaces physiques standards pour constituer un réseau de transport. Aussi, on trouvera dans cette bibliothèque au moins les éléments suivants :
- un utilitaire pour paramétrer le protocole de communication ;
- un générateur de blocs IP configurables pour chaque type d'interface réseau supportée ;
- un générateur de blocs IP de commutateurs configurables, comprenant comme paramètres le nombre d'entrées, le nombre de sorties, les types de tables de routage, les couches d'une architecture pipeline et les types d'arbitrages ;
- des blocs IP de transport pour changer la fréquence et le format des liens, pour compacter les paquets ou pour transporter les paquets sur de grandes distances avec ou sans pipeline ; et
- des moyens nécessaires à l'accès des registres de configuration à travers le réseau de programmation à faible coût, appelé également réseau de service, pour configurer les blocs IP générés.

Chaque générateur peut, par exemple, produire des descriptions en langage Verilog ou VHDL synthétisables par des outils de CAO usuels.

Ces générateurs sont codés dans un langage qui permet de décrire facilement l'espace des paramètres de façon structurée.

Par exemple, un générateur peut supporter des listes de paramètres, elles-mêmes paramétrables comme dans le cas du générateur de blocs IP de commutateurs, pour lequel il est possible de choisir un type d'arbitrage pour chaque sortie, chaque type d'arbitre ayant lui-même ses propres paramètres.

## Revendications

1. Système d'interconnexions (20) de blocs fonctionnels externes sur puce muni d'un unique protocole paramétrable de communication, **caractérisé en ce qu'**il comprend deux réseaux de communication (21, 22) physiquement distincts, un réseau de requêtes (21) apte à transmettre des messages de requête d'un bloc initiateur (23, 24, 25, 26) vers un bloc destinataire (27, 28, 29, 30, 31) et un réseau de réponses (22) apte à transmettre des messages de réponse d'un bloc destinataire (27, 28, 29, 30, 31) à un bloc initiateur (23, 25, 26), et **en ce que** les messages de réponse comprennent des informations additionnelles comprenant une information représentative de l'opération effectuée et une information représentative de la taille des données associées à ladite opération effectuée de manière à rendre lesdits réseaux de requêtes (21) et de réponses (22) aptes à gérer respectivement les messages de requête et les messages de réponse de manière indépendante.

2. Système selon la revendication 1, dans lequel ledit protocole est organisé en une pluralité de couches indépendantes, lesdites couches indépendantes comprenant une couche de transport définissant la structure d'un paquet de données, et une couche physique définissant les signaux échangés aux interfaces des éléments du système d'interconnexions (20), des informations d'adresse, de taille de données, et d'opération étant contenues dans les en-têtes des paquets de données.

3. Système selon la revendication 2 ou 3, dans lequel l'opération est une lecture ou une écriture de données.

4. Système selon l'une des revendications 1 à 3, dans lequel, suite à une lecture de données incomplètes ou non alignées par rapport à l'espace mémoire accédé lors de ladite lecture, les paquets du message de réponse associé à ladite lecture comprennent, à une position prédéterminée, lesdites données lues.

5. Système selon l'une des revendications 1 à 3, dans lequel, suite à une lecture de données incomplètes ou non alignées par rapport à l'espace mémoire accédé lors de ladite lecture, les en-têtes des paquets du message de réponse associé à ladite lecture comprennent une information pour aligner lesdites données lues par rapport audit espace mémoire accédé.

6. Système selon l'une des revendications 1 à 5, dans lequel l'interface entre deux éléments du système d'interconnexions comprend :
- des moyens pour recevoir ou transférer un signal de cadencement d'horloge,
- des moyens pour transférer ou recevoir des signaux d'arrêt ou de démarrage desdits éléments de manière indépendante,
- des moyens de transfert de signaux de contrôle de flux relatif aux cycles d'horloge.
- des moyens de transfert de signaux de délimitation des paquets de données, et
- des moyens de transfert de signaux de taille paramétrable de transmission de contenu des paquets de données.

7. Système selon la revendication 6, dans lequel l'interface entre deux éléments du système d'interconnexions comprend, en outre;, des moyens de génération de signaux permettant de favoriser la transmission de messages par rapport à d'autres.

8. Système selon l'une des revendications 1 à 7, dans lequel les en-têtes des paquets de données comprennent un espace disponible réservé à l'usage des blocs initiateurs (23, 25, 26).

9. Système selon l'une des revendications 1 à 8, dans lequel les paquets de données sont de longueur variable, égale à un multiple d'une quantité élémentaire de données, un lien du système pouvant être paramétré par le rapport entre la quantité de données qu'il peut transmettre par cycle d'horloge et ladite quantité élémentaire de données.

10. Système selon l'une des revendications 1 à 9, dans lequel les liens comprennent des moyens de changement de fréquence d'horloge, et/ou des moyens de suppression de trous de données dans les paquets de données en cas de taux de trous prédictible, et/ou des moyens (35, 36, 37, 38, 53, 54, 55) de changement de sérialisation des paquets.

11. Système selon l'une des revendications 1 à 10, dans lequel les éléments du système d'interconnexions (20) sont configurables par des moyens logiciels par l'intermédiaire d'un réseau séparé.

12. Système selon la revendication 11, dans lequel ledit réseau séparé est apte à fonctionner à faible débit par rapport au débit moyen dans le système d'interconnexions.

## Claims

1. System of interconnections (20) for external functional blocks on a chip provided with a single programmable communication protocol, **characterized in that** it comprises two physically separate communication networks (21, 22), a request network (21) for transmitting request messages from an initiating block (23, 24, 25, 26) to a recipient block (27, 28, 29, 30, 31) and a response network (22) for transmitting response messages from a recipient block (27, 28, 29, 30, 31) to an initiating block (23, 25, 26), and **in that** the response messages include additional information including information representative of the operation carried out and information representative of the size of the data associated with said operation carried out so as to make said request (21) and response (22) networks able to respectively manage the request messages and the response messages independently.

2. System according to Claim 1, in which said protocol is organized in a plurality of independent layers, said independent layers comprising a transport layer defining the structure of a data packet, and a physical layer defining the signals interchanged at the interfaces of the elements of the system of interconnections (20), address, data size and operation information being contained in the headers of the data packets.

3. System according to Claim 1 or 2, in which the operation is a data read or data write.

4. System according to one of Claims 1 to 3, in which, following a read of data that is incomplete or unaligned in relation to the memory space accessed in said read, the packets of the response message associated with said read include, at a predetermined position, said data that has been read.

5. System according to one of Claims 1 to 3, in which, following a read of data that is incomplete or unaligned in relation to the memory space accessed in said read, the headers of the packets of the response message associated with said read include information for aligning said data that has been read in relation to said memory space accessed.

6. System according to one of Claims 1 to 5, in which the interface between two elements of the system of interconnections comprises:
- means for receiving or transferring a clock timing signal,
- means for transferring or receiving signals for stopping or starting said elements independently,
- means of transferring flow control signals relating to the clock cycles,
- means of transferring data packet delimiting signals, and
- means of transferring signals of programmable size for transmitting the content of the data packets.

7. System according to Claim 6, in which the interface between two elements of the system of interconnections also comprises signal generation means for favouring the transmission of some messages over others.

8. System according to one of Claims 1 to 7, in which the headers of the data packets include an available space reserved for the use of the initiating blocks (23, 25, 26).

9. System according to one of Claims 1 to 8, in which the data packets are of variable length, equal to a multiple of an individual quantity of data, a system link being programmable by the ratio between the quantity of data that it can transmit in each clock cycle and said individual quantity of data.

10. System according to one of Claims 1 to 9, in which the links include means of changing the clock frequency, and/or means of deleting data holes in the data packets in case of predictable hole ratios, and/or means (35, 36, 37, 38, 53, 54, 55) of changing the serialization of the packets.

11. System according to one of Claims 1 to 10, in which the elements of the system of interconnections (20) are configurable by software means via a separate network.

12. System according to Claim 11, in which said separate network is able to operate at a low bit rate compared to the average bit rate in the system of interconnections.

## Patentansprüche

1. Verbindungssystem (20) für externe Funktionsbausteine auf einem Chip, wobei das System mit einem einzelnen parametierbaren Kommunikationsprotokoll versehen ist, **dadurch gekennzeichnet, dass** es zwei physikalisch gesonderte Kommunikationsnetzwerke (21, 22), ein Anforderungsnetzwerk (21), das in der Lage ist, Anforderungsmeldungen von einem Auslösebaustein (23, 24, 25, 26) zu einem Empfangsbaustein (27, 28, 29, 30, 31) zu senden, und ein Antwortnetzwerk (22), das in der Lage ist, Antwortmeldungen von einem Empfangsbaustein (27, 28, 29, 30, 31) zu einem Auslösebaustein (23, 25, 26) zu senden, aufweist und dass die Antwortmeldungen zusätzliche Informationen aufweisen, die eine die ausgeführte Operation kennzeichnende Information und eine die Größe der mit der ausgeführten Operation in Zusammenhang stehenden Daten kennzeichnende Information aufweisen, derart, dass das Anforderungsnetzwerk (21) und das Antwortnetzwerk (22) in die Lage versetzt werden, die Anforderungsmeldungen und die Antwortmeldungen unabhängig voneinander zu verwalten.

2. System nach Anspruch 1, in dem das Protokoll in mehreren unabhängigen Schichten organisiert ist, wobei die unabhängigen Schichten eine Transportschicht, die die Struktur eines Datenpakets definiert, und eine physikalische Schicht aufweisen, die die an den Schnittstellen zwischen den Elementen des Verbindungssystems (20) ausgetauschten Signale, Informationen in Bezug auf die Adresse, die Datengröße und die Operation, die in den Headern der Datenpakete enthalten sind, definieren.

3. System nach Anspruch 2 oder 3, in dem die Operation ein Datenlesevorgang oder ein Datenschreibvorgang ist.

4. System nach einem der Ansprüche 1 bis 3, in dem nach einem Lesen von unvollständigen oder in Bezug auf den Speicherraum, auf den bei dem Lesen zugegriffen wird, nicht ausgerichteten Daten die Pakete der Antwortmeldung, die mit dem Lesevorgang in Zusammenhang steht, an einer vorbestimmten Position die gelesenen Daten aufweisen.

5. System nach einem der Ansprüche 1 bis 3, in dem nach einem Lesen von unvollständigen oder in Bezug auf den Speicherraum, auf den bei einem Lesevorgang zugegriffen wird, nicht ausgerichteten Daten die Header der Pakete der Antwortmeldung, die mit dem Lesevorgang in Zusammenhang steht, eine Information zur Ausrichtung der gelesenen Daten in Bezug auf den Speicherraum, auf den zugegriffen wird, aufweisen.

6. System nach einem der Ansprüche 1 bis 5, in dem die Schnittstelle zwischen zwei Elementen des Verbindungssystems aufweist:
- Mittel zum Empfang oder zur Übertragung eines Taktgeberzeitsteuerungssignals,
- Mittel zur Übertragung oder zum Empfang von Signalen zum Anhalten oder Starten der Elemente auf eine unabhängige Weise,
- Mittel zur Übertragung von Flusssteuerungssignalen in Bezug auf die Taktzyklen,
- Mittel zur Übertragung von Signalen zur Begrenzung von Datenpaketen, und
- Mittel zur Übertragung von Signalen in Bezug auf die parametrierbare Größe zur Übertragung des Inhalts der Datenpakete.

7. System nach Anspruch 6, in dem die Schnittstelle zwischen zwei Elementen des Verbindungssystems ferner Signalerzeugungsmittel aufweist, die es ermöglichen, die Übertragung von Meldungen in Bezug auf andere zu priorisieren.

8. System nach einem der Ansprüche 1 bis 7, in dem die Header der Datenpakete einen verfügbaren Raum enthalten, der zur Verwendung der Auslösebausteine reserviert ist.

9. System nach einem der Ansprüche 1 bis 8, in dem die Datenpakete eine variable Länge aufweisen, die einem Vielfachen einer elementaren Datenmenge entspricht, wobei eine Systemverbindung durch das Verhältnis zwischen der Datenmenge, die sie in jedem Taktzyklus übertragen kann, und der elementaren Datenmenge parametrisiert werden kann.

10. System nach einem der Ansprüche 1 bis 9, in dem die Verbindungen Mittel zur Änderung der Taktfrequenz und/oder Mittel zur Beseitigung von Datenlöchern in den Datenpaketen im Falle vorhersagbarer Lochverhältnisse und/oder Mittel (35, 36, 37, 38, 53, 54, 55) zur Änderung der Serialisierung der Pakete enthalten.

11. System nach einem der Ansprüche 1 bis 10, in dem die Elemente des Verbindungssystems (20) durch Softwaremittel über ein gesondertes Netzwerk konfigurierbar sind.

12. System nach Anspruch 11, in dem das gesonderte Netzwerk in der Lage ist, mit einer geringen Datenrate im Vergleich zu der mittleren Datenrate in dem Verbindungssystem zu arbeiten.
